# FASCICULE DE BREVET EUROPEEN

(11) **EP 0 578 579 B1**
(45) Date de publication et mention de la délivrance du brevet: **26.03.1997**
(21) Numéro de dépôt: 93401791.4
(22) Date de dépôt: 08.07.1993
(51) Int. Cl.: G01N 30/96

(54) **Procédé de dosage du phosphate de tributyle et/ou du butanol par chromatographie en phase liquide**
Verfahren zur Dosierung von Tributyl und/oder Butanol durch Flüssigphasenchromatographie
Process for dispensing tributyle and/or butanole by liquid-phase chromatography

(30) Priorité: 10.07.1992 FR 9208583
(43) Date de publication de la demande: 12.01.1994
(73) Titulaire: COMPAGNIE GENERALE DES MATIERES NUCLEAIRES (COGEMA), F-78141 Vélizy-Villacoublay (FR)
(72) Inventeur: Muller, Jean-Paul, F-30200 Orsan (FR); Cojean, Joel, F-30200 Bagnols sur Ceze (FR); Gentil, Roland, F-30200 Bagnols Sur Ceze (FR)
(74) Mandataire: Des Termes, Monique

(56) Documents cités:
- ANALUSIS vol. 13, no. 4, 1985, pages 160 - 165 MULLER AT AL. 'determination du phosphate de dibutyle et du phosphate de tributyle à l'état de traces dans les solutions de retraitement des combustibles nucléaires par chromatographie en phase liquide'
- ANALUSIS vol. 11, no. 6, 1983, pages 271 - 277 MULLER AT AL. 'dosage du solvant phosphate de tributyle-hyfrane 120 par chromatographie en phase liquide'
- JOURNAL OF CHROMATOGRAPHY vol. 537, no. 1-2, 1991, AMSTERDAM NL pages 489 - 493 Y. KUNO ET AL. 'simultanious determination of tributylphosphate and dibutylphosphate in spent fuel reprocessing streams by gas chromatography'
- PATENT ABSTRACTS OF JAPAN vol. 154, no. 66 (P-1280)26 Novembre 1991 & JP-A-31 99 963 ( SHIMAZDU CORP )
- PATENT ABSTRACTS OF JAPAN vol. 154, no. 95 (P-1288)13 Décembre 1991 & JP-A-32 14 100 ( SHIMAZDU CORP )

## Description

La présente invention a pour objet un procédé de dosage du phosphate de tributyle et/ou du butanol présents dans une solution organique, telle que les solvants organiques, utilisés dans les installations de retraitement de combustibles nucléaires usés, pour extraire l'uranium et le plutonium.

Dans les installations de retraitement de combustibles nucléaires usés utilisant le procédé PUREX, la pratique habituelle pour séparer l'uranium et le plutonium des produits de fission est d'extraire l'uranium et le plutonium dans un solvant organique constitué par du phosphate de tributyle (TBP) dans un diluant organique approprié tel que le dodécane, le tétrapropylène hydrogéné, l'Hyfrane® etc.

Dans ces installations, il est donc nécessaire de contrôler les concentrations en phosphate de tributyle du solvant à divers stades du procédé. Ceci peut être effectué par diverses techniques, en particulier par chromatographie en phase liquide (CPL) comme il est décrit par J.P. Muller et al, dans Analusis, 1983, vol. 11, n°6, p. 271-277.

Le procédé de dosage du TBP décrit par J.P. Muller et al, consiste à utiliser une colonne remplie d'une phase stationnaire non polaire (Lichrosorb RP®) avec une phase liquide mobile polaire (méthanol) et à détecter le phosphate de tributyle sortant de la colonne par réfractométrie.

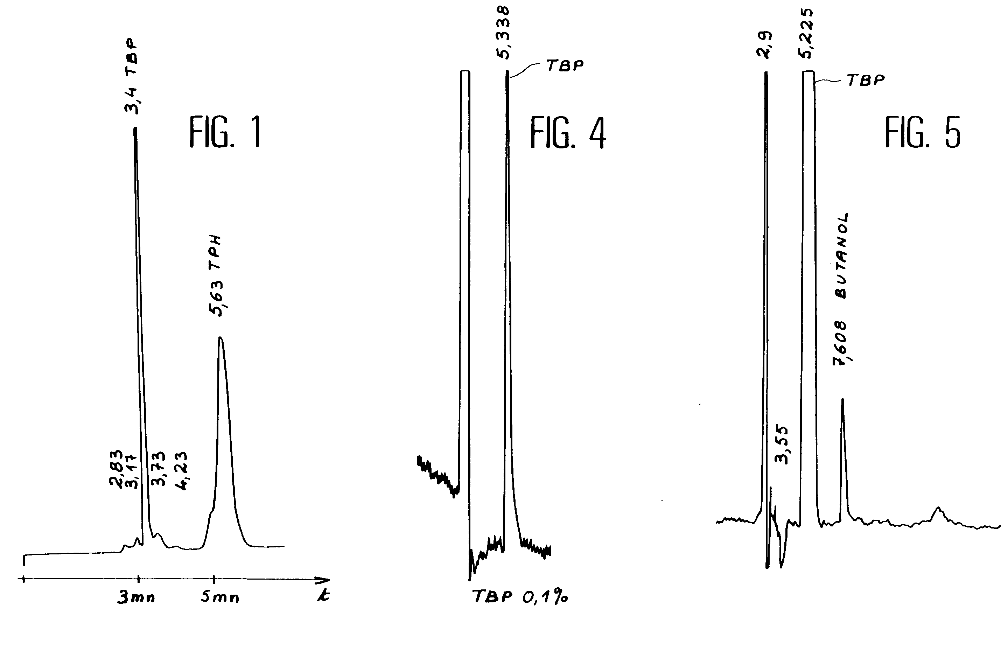

Dans ce cas, comme il est représenté sur la figure 1 annexée qui est un chromatogramme obtenu avec ce procédé sur un solvant organique très dégradé, on observe en sortie de colonne un premier pic qui correspond au phosphate de tributyle (TBP) avec un temps de rétention d'environ 3min, puis un deuxième pic qui correspond au diluant (tétrapropylène hydrogéné TPH) à environ 5min. Par ailleurs, on observe, de part et d'autre du pic correspondant au TBP, d'autres petits pics qui sont dus aux produits de dégradation du TBP. De ce fait, on ne peut pas mesurer la concentration en TBP par la surface du pic du TBP mais par sa hauteur, car la présence de ces petits pics à la base du pic du TBP conduit à une mauvaise intégration de la surface du pic du TBP.

Ceci constitue un inconvénient car la hauteur du pic varie en fonction de la température ambiante. Le dosage n'est donc pas reproductible et il ne peut être utilisé lorsque la teneur en TBP est inférieure à 2% en volume.

De plus, avec ce dosage, le temps de rétention du TBP est d'environ 3min alors que le temps de volume mort de la colonne, c'est-à-dire le temps que mettent les solutions qui ne sont pas retenues à sortir de la colonne, est d'environ 2,5min. La sortie du TBP ne correspond donc pas réellement à une séparation chromatographique.

La présente invention a précisément pour objet, un procédé de dosage du phosphate de tributyle et/ou du butanol par chromatographie en phase liquide qui permet d'obtenir une meilleure sensibilité en séparant bien le TBP de ses produits de dégradation.

Le procédé selon l'invention de dosage du phosphate de tributyle et/ou du butanol présents dans une solution organique, comprend les étapes suivantes :
a) injecter un échantillon de la solution à doser dans une colonne de chromatographie remplie d'une phase stationnaire solide polaire et parcourue par une phase liquide mobile comprenant au moins 50% en volume de solvant apolaire, et
b) détecter et déterminer les quantités de phosphate de tributyle et/ou de butanol sortant de la colonne, par réfractométrie.

Dans ce procédé, le choix d'une phase stationnaire solide polaire et d'une phase liquide mobile à caractère apolaire, permet de retenir le TBP plus longtemps dans la colonne et de le séparer ainsi totalement des produits de dégradation du solvant, le TBP sortant pratiquement en dernier de la colonne juste avant le butanol.

De ce fait, la reproductibilité du dosage peut être bonne dans une large gamme de concentrations en TBP (0 à 100%), alors qu'auparavant, on avait une bonne précision et une bonne reproductibilité, uniquement dans le domaine de concentrations allant de 3 à 35%.

De plus, le procédé de l'invention permet de doser le butanol présent à titre d'impuretés dans le TBP car avec ce système de phases stationnaire et mobile, le butanol sort en dernier.

Enfin, le procédé permet de réaliser un dosage sans dilution de l'échantillon à doser, de réduire la quantité d'effluents produits et de doser avec précision des solvants dégradés.

Dans ce procédé, on peut utiliser comme phase stationnaire polaire une phase solide greffée par des groupements polaires tels que des groupements OH, NH₂, NO₂ et CN. De préférence, on utilise comme groupements polaires des groupes NH₂.

A titre d'exemple d'une telle phase solide, on peut citer la BROWNLEE NH₂ qui a une granulométrie de 5µm.

La phase liquide mobile utilisée dans le procédé de l'invention présente un caractère apolaire, mais généralement on utilise un mélange d'un solvant organique apolaire et d'un solvant organique polaire, par exemple un mélange comprenant de 50 à 80% en volume de solvant organique apolaire et de 20 à 50% en volume de solvant organique polaire.

La présence du solvant polaire permet d'accélérer un peu la sortie du TBP car si celui-ci est retenu trop longtemps dans la colonne, le pic chromatographique devient trop étalé, ce qui nuit à la précision du dosage.

Les solvants organiques apolaires utilisés peuvent être en particulier des hydrocarbures non miscibles à l'eau tels que l'hexane et l'heptane.

Les solvants organiques polaires utilisés sont des composés légèrement polaires tels que l'acétate d'éthyle et l'acétate de propyle. La quantité de solvant polaire utilisée dépend en particulier du taux de pontage de la phase solide polaire et elle est choisie de façon à régler le temps de rétention du TBP dans la colonne à une valeur appropriée.

A titre d'exemple d'une phase liquide mobile utilisable dans l'invention, on peut citer le mélange comprenant 25% en volume d'acétate d'éthyle et 75% en volume d'heptane.

Le procédé de l'invention peut être mis en oeuvre dans des installations classiques de chromatographie comprenant :
- une pompe pour chromatographie haute pression,
- une vanne d'injection munie d'une boucle d'échantillonnage de capacité voulue, par exemple de 20µl,
- une colonne de chromatographie remplie de phase stationnaire,
- un détecteur réfractométrique différentiel, et
- un calculateur pour le pilotage et la détermination de l'aire des pics chromatographiques correspondant au TBP et au butanol.

Le procédé de l'invention peut être utilisé en particulier pour contrôler les teneurs en TBP des solvants organiques d'extraction des usines de retraitement de combustibles usés, qui peuvent comprendre, en plus des diluants organiques habituellement utilisés (Hyfrane 120, dodécane et tétrapropylène hydrogéné), de l'uranium, du plutonium, des produits de fission et des produits de dégradation du TBP (phosphate de dibutyle, phosphate de monobutyle, butanol). On peut aussi utiliser le procédé de l'invention pour doser le TBP dans les phases organiques utilisées pour réextraire le TBP entraîné par les solutions aqueuses dans ces mêmes usines. Dans ce dernier cas, les concentrations en TBP sont beaucoup plus faibles et le procédé de l'invention permet d'atteindre une précision élevée.

D'autres caractéristiques et avantages de l'invention apparaîtront mieux à la lecture de la description qui suit, donnée bien entendu à titre illustratif et non limitatif, en référence au dessin annexé sur lequel :
- la figure 1 déjà décrite représente le chromatogramme d'un mélange de TBP et de TPH obtenu par un procédé de l'art antérieur,
- la figure 2 représente de façon schématique une installation chromatographique pour mettre en oeuvre le procédé de l'invention, et
- les figures 3 à 5 représentent les chromatogrammes obtenus lors de dosages de TBP (fig. 3 et 4) et de TBP et butanol (fig. 5) selon le procédé de l'invention.

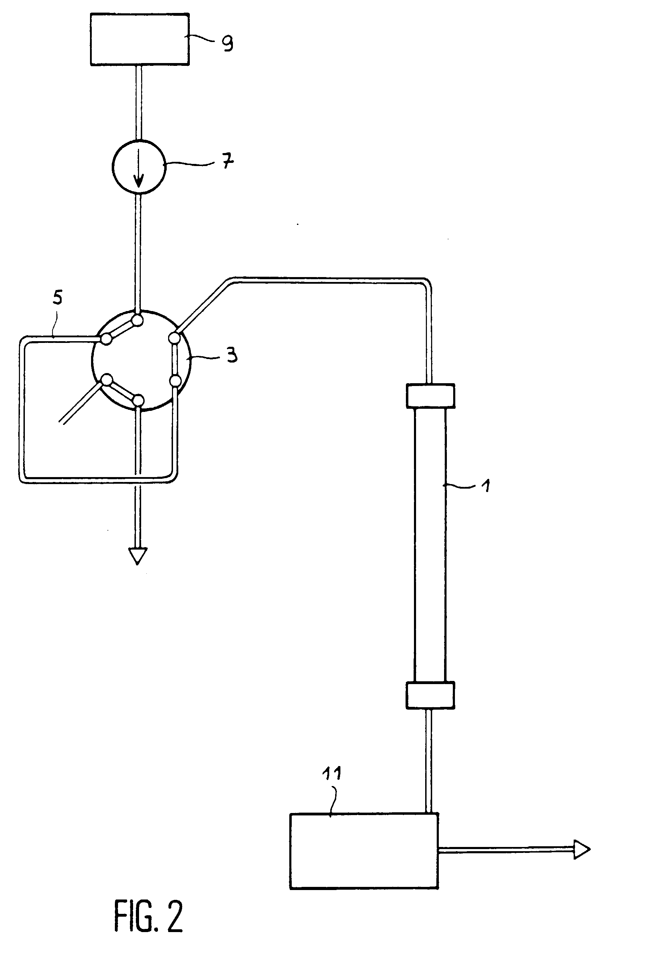

Sur la figure 2, on voit que l'installation de chromatographie comprend une colonne de chromatographie (1) dans laquelle on introduit un échantillon par une vanne d'injection (3) à trois voies, munie d'une boucle interne (5) pour échantillonner le volume voulu. La vanne (3) peut être reliée par l'intermédiaire d'une pompe (7) à un réservoir (9) de phase liquide mobile.

A la sortie de la colonne (1), on détecte les produits au moyen d'un détecteur réfractométrique différentiel (11) muni d'un intégrateur-calculateur.

A titre d'exemple, on décrit, ci-après, l'utilisation de cette installation pour doser le TBP dilué dans un solvant d'extraction utilisant le tétrapropylène hydrogéné comme diluant.

Pour ce dosage, on utilise une colonne d'une longueur de 25cm et d'un diamètre de 2,1mm remplie de phase stationnaire polaire constituée par BROWNLEE NH₂ d'une granulométrie de 5µm, et une phase mobile constituée par un mélange comprenant 25% en volume d'acétate d'éthyle et 75% en volume d'heptane.

On injecte 1µl de l'échantillon dans la colonne de chromatographie (1) par l'intermédiaire de la vanne (3) avec la phase mobile et on fait circuler la phase mobile dans la colonne à un débit de 0,2ml/min.

On détecte les produits sortant de la colonne au moyen du détecteur réfractométrique différentiel (11).

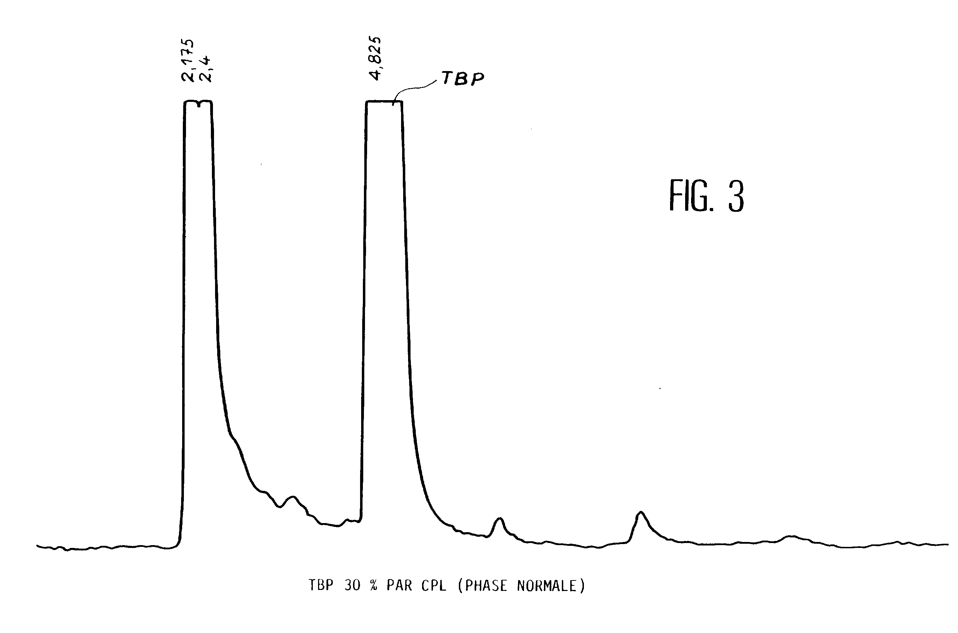

Sur la figure 3, on a représenté le chromatogramme obtenu dans ces conditions. Sur ce chromatogramme, le premier pic correspond au diluant (tétrapropylène hydrogéné) et le deuxième pic correspond au TBP. Il est bien séparé des autres pics, ce qui permet d'obtenir la concentration en TBP (30%) par intégration de l'aire du pic avec une bonne précision et une bonne reproductibilité, après un étalonnage approprié effectué avec des solutions ayant des concentrations connues en TBP.

Sur la figure 4, on a représenté le chromatogramme obtenu de la même façon sur une solution de TBP ayant une concentration en TBP beaucoup plus faible (0,1%). Dans ce cas, le premier pic correspond au tétrapropylène hydrogéné et le deuxième pic qui est beaucoup plus mince représente le TBP.

Sur la figure 5, on a représenté le chromatogramme obtenu lors du dosage de TBP et de butanol dans un solvant organique, utilisant comme diluant du tétrapropylène hydrogéné, le dosage étant effectué dans les conditions suivantes :
- colonne : longueur 22cm, diamètre 2,1mm,
- phase solide stationnaire : silice greffée NH₂, 5µm "BROWNLEE",
- phase mobile : 75% en volume d'heptane et 25% en volume d'acétate d'éthyle,
- échantillon : 1µl
- débit de la phase mobile : 0,2ml/min.

Sur cette figure 5, le premier pic correspond au diluant, le second pic correspond au TBP (30% en volume) et le troisième pic correspond au butanol (1% en volume).

Ainsi, le procédé de l'invention permet de doser dans de bonnes conditions le TBP ainsi que le butanol éventuellement présent.

## Revendications

1. Procédé de dosage du phosphate de tributyle et/ou du butanol présents dans une solution organique, caractérisé en ce qu'il comprend les étapes suivantes :
a) injecter un échantillon de la solution à doser dans une colonne de chromatographie remplie d'une phase stationnaire solide polaire et parcourue par une phase liquide mobile comprenant au moins 50% en volume de solvant apolaire, et
b) détecter et déterminer les quantités de phosphate de tributyle et/ou de butanol sortant de la colonne, par réfractométrie.

2. Procédé selon la revendication 1, caractérisé en ce que la phase solide stationnaire polaire comporte des groupements NH₂.

3. Procédé selon la revendication 2, caractérisé en ce que la phase solide stationnaire polaire est constituée de silice greffée par des groupements NH₂.

4. Procédé selon l'une quelconque des revendications 1 à 3, caractérisé en ce que la phase liquide mobile est un mélange comprenant de 50 à 80% en volume de solvant organique apolaire et de 20 à 50% en volume de solvant organique polaire.

5. Procédé selon l'une quelconque des revendications 1 et 4, caractérisé en ce que le solvant organique apolaire est un hydrocarbure non miscible à l'eau.

6. Procédé selon la revendication 5, caractérisé en ce que l'hydrocarbure est l'heptane.

7. Procédé selon la revendication 4, caractérisé en ce que le solvant organique polaire est l'acétate d'éthyle ou l'acétate de propyle.

8. Procédé selon l'une quelconque des revendications 1 à 3, caractérisé en ce que la phase liquide mobile est un mélange comprenant 25% en volume d'acétate d'éthyle et 75% en volume d'heptane.

## Patentansprüche

1. Verfahren zur Bestimmung von Tributylphosphat und/oder Butanol, die in einer organischen Lösung vorhanden sind, dadurch gekennzeichnet, daß es die folgenden Schritte umfaßt:
a) Injektion einer Probe der Lösung, deren Gehalt bestimmt werden soll, in eine Chromatographie-Kolonne, die gefüllt ist mit einer polaren festen stationären Phase und durchströmt wird von einer flüssigen mobilen Phase, welche mindestens 50 Vol.-% unpolares Lösungsmittel enthält, und
b) refraktometrische Detektion und Bestimmung der Mengen von Tributylphosphat und/oder Butanol, die aus der Kolonne austreten.

2. Verfahren nach Anspruch 1, dadurch gekennzeichnet, daß die polare feste stationäre Phase NH₂-Gruppen enthält.

3. Verfahren nach Anspruch 2, dadurch gekennzeichnet, daß die polare feste stationäre Phase aus mit NH₂-Gruppen gepfropftem Siliciumdioxid besteht.

4. Verfahren nach einem der Ansprüche 1 bis 3, dadurch gekennzeichnet, daß die flüssige mobile Phase eine Mischung ist, welche 50 bis 80 Vol.-% unpolares organisches Lösungsmittel und 20 bis 50 Vol.-% polares organisches Lösungsmittel enthält.

5. Verfahren nach einem der Ansprüche 1 und 4, dadurch gekennzeichnet, daß das unpolare organische Lösungsmittel ein mit Wasser nicht mischbarer Kohlenwasserstoff ist.

6. Verfahren nach Anspruch 5, dadurch gekennzeichnet, daß der Kohlenwasserstoff Heptan ist.

7. Verfahren nach Anspruch 4, dadurch gekennzeichnet, daß das polare organische Lösungsmittel Ethylacetat oder Propylacetat ist.

8. Verfahren nach einem der Ansprüche 1 bis 3, dadurch gekennzeichnet, daß die flüssige mobile Phase eine Mischung ist, welche 25 Vol.-% Ethylacetat und 75 Vol.-% Heptan enthält.

## Claims

1. Process for the determination of tributyl phosphate and/or butanol present in an organic solution, characterized in that it comprises the following stages:
a) injecting a sample of the solution to be determined into a chromatographic column filled with a polar, solid stationary phase and traversed by a mobile, liquid phase incorporating at least 50% by volume apolar solvent and
b) detecting and determining the tributyl phosphate and/or butanol quantities leaving the column by refractometry.

2. Process according to claim 1, characterized in that the polar, stationary solid phase contains NH₂ groups.

3. Process according to claim 2, characterized in that the polar, stationary solid phase is constituted by silica grafted by NH₂ groups.

4. Process according to any one of the claims 1 to 3, characterized in that the mobile, liquid phase is a mixture incorporating 50 to 80% by volume apolar organic solvent and 20 to 50% by volume polar organic solvent.

5. Process according to any one of the claims 1 and 4, characterized in that the apolar, organic solvent is a water-immiscible hydrocarbon.

6. Process according to claim 5, characterized in that the hydrocarbon is heptane.

7. Process according to claim 4, characterized in that the polar, organic solvent is ethyl acetate or propyl acetate.

8. Process according to any one of the claims 1 to 3, characterized in that the mobile, liquid phase is a mixture incorporating 25% by volume ethyl acetate and 75% by volume heptane.
